(19)

Europäisches
Patentamt

European
Patent Office

Office européen
des brevets

(11) **EP 4 769 342 A1**

(12) **EUROPEAN PATENT APPLICATION**

(43) Date of publication:
01.07.2026 Bulletin 2026/27

(21) Application number: 24307297.2

(22) Date of filing: 24.12.2024

(51) International Patent Classification (IPC):
*G06V 40/10* (2022.01)   *A01K 45/00* (2006.01)

(52) Cooperative Patent Classification (CPC):
**G06V 40/10; A01K 45/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Egg-Chick Automated Technologies
29800 Plouédern (FR)**

(72) Inventor: **BOUKAMCHA, Hamdi
29800 PLOUEDERN (FR)**

(74) Representative: **Plasseraud IP
104 Rue de Richelieu
CS92104
75080 Paris Cedex 02 (FR)**

(54) **CHICK GENDER DETERMINATION AND SORTING USING DEEP LEARNING MODELS**

(57)    It is disclosed an image processing device (30) for chick gender determination, comprising at least one Graphical Processing Unit GPU (31) and a memory (32), the image processing device being configured to receive a stream of images, and to implement on the received stream of images:
- at least one ROI detection module (320), configured for detecting, in an image of the stream of images, a Region of Interest (ROI) of wings comprising wing feathers, and
- at least one classification module (340), configured for receiving the ROI and for determining the gender of a chick based on the detected ROI,
wherein the ROI detection module (320) and classification module (340) are configured for implementing deep learning models.

FIG. 2

EP 4 769 342 A1

**Description**

FIELD OF THE INVENTION

The present disclosure relates to image processing systems for chick gender determination and sorting.

TECHNICAL BACKGROUND

In the field of chick gender determination and sorting, image processing systems aim to accurately identify the gender of chicks based on visual features, and in particular based on the specific pattern of wing feathers or remiges, which differ between male and female chicks. This process typically involves capturing images of chicks, detecting specific regions of interest (ROI) such as wing feathers, and classifying these regions to determine the gender. The goal is to automate the sorting process, ensuring high accuracy and efficiency while minimizing manual intervention.

Achieving accurate chick gender determination requires overcoming several challenges. These include capturing high-quality images in varying lighting conditions, detecting and sorting multiple chicks simultaneously, and accurately classifying the gender based on subtle visual differences. Additionally, the system must keep up with the high throughput of chicks on a conveyor system and not suffer delays, otherwise the chicks may be improperly sorted.

It is known from prior art that traditional methods for chick gender determination often rely on manual inspection or basic image processing techniques. Manual inspection has traditionally been used for chick gender determination. This method involves trained personnel visually inspecting each chick to identify its gender based on physical characteristics, such as the presence or absence of certain feather patterns. This method has several drawbacks, and in particular is time-consuming, prone to errors and causes stress and discomfort to the chicks.

It is known from Tao et al.: "Chick Feather Pattern Recognition", a method for chick feather pattern recognition using image processing and pattern recognition techniques. It includes the use of a crescent model for wing image processing and feature extraction.

It is also known from WO 2023/281197 filed by the applicant, an improved method for determining the gender of a chick using image processing and classification models. It includes determining a region of interest, extracting wing features by image processing techniques, and applying a classification model trained on images of male and female chick wings to determine the gender of the chick.

The above methods, while achieving significant progress as compared to manual inspection, may not handle high volumes efficiently and with high accuracy.

SUMMARY OF THE INVENTION

In view of the above, on aim of the invention is to provide an image processing device that can accurately and efficiently determine the gender of chicks, while keeping high throughput.

To this end, an image processing device for chick gender determination is disclosed, comprising at least one Graphical Processing Unit GPU and a memory, the image processing device being configured to receive a stream of images, and to implement on the received stream of images:

- at least one ROI detection module, configured for detecting, in an image of the stream of images, a Region of Interest ROI of wings comprising wing feathers, and
- at least one classification module, configured for receiving the detected ROI and for determining the gender of a chick based on the detected ROI,

wherein the ROI detection module and classification module are configured for implementing deep learning models.

The implementation of deep learning models in both the ROI detection module and the classification module enhances the accuracy and reliability of gender determination by learning complex patterns and features from large datasets. The implementation of these deep learning models by at least one GPU enables high-throughput chick gender determination.

In embodiments, the various processing modules, in particular the ROI detection module and the classification module, are asynchronous, allowing for parallel processing on the at least one GPU, which significantly enhances the overall speed and efficiency of the system. This reduces latency and ensures that the high throughput of chick images can be maintained without bottlenecks, leading to faster and more reliable gender determination.

In embodiments, the classification module is configured to classify the gender of a chick based on multiple images acquired for the same chick.

In embodiments, the classification module is configured to pre-classify a Region of Interest comprising wing feathers as male or female by implementation of a deep learning model, and further includes a logistic regression stage

configured to make a final determination of the gender of the chick based on the pre-classification results of all the images. By considering multiple images, the system can account for variations and inconsistencies in individual images, leading to a more reliable final classification.

In embodiments, the deep learning model is configured to pre-classify a Region of Interest of wing with wing feathers as "male", "female", or "unknown".

In embodiments, the ROI detection module is further configured to detect Regions of Interest of wings without wing feathers, and the classification module is configured to take into account both ROI of wings with wing feathers and ROI of wings without wing feathers obtained for the chick. This dual consideration allows the classification module to account for additional visual information that may be relevant to gender determination. The inclusion of WWR as a feature helps to reduce misclassification by providing a more complete dataset for analysis.

In embodiments, the logistic regression stage is configured to use one or more of the following categories of features for performing the final determination of the gender of a chick:

- Number of ROI detected as "male" or "female" among the multiple images acquired for the same chick,
- Number of ROI pre-classified as "male" or "female" but with a confidence score lower than a determined threshold such as 90% or 95%,
- Number of ROI pre-classified as "male" or "female" with a confidence score higher than a determined threshold such as 90% or 95%,
- Confidence rates of ROI detected as "male" or "female", and/or sum of the confidence rates for a plurality of ROI detected as "male" or "female",
- Total number of ROI processed for the considered chick.

In embodiments, the logistic regression stage is further configured to use, for performing the final determination of the gender of a chick, binary indicators representing the presence of wings without wing feathers among the multiple images acquired for the same chick.

In embodiments, the logistic regression stage is further configured to use, for determining the gender of a chick, a number of ROI of wings with wing feathers detected as "unknown" among the multiple images acquired for the same chick.

The number of ROI provides a quantitative measure of detected regions, the confidence rates offer a probabilistic assessment of the classification, and the binary indicators ensure that the presence of key features is accounted for. Relying on the diversity of theses approaches allows the system to better handle variations and inconsistencies in individual images, leading to a more robust and accurate final determination of the chick's gender.

In embodiments, the device comprises a tracking module that track chicks in the received stream of images. The chicks may be tracked as they pass through the field of view of the camera(s), allowing for acquisition of multiple images of the chicks under different positions, and hence increasing accuracy in the determination. This enables benefiting from a larger length of the conveyor to perform gender determination.

The combination of the classification module's ability to pre-classify ROIs as male or female for a plurality of images acquired for the same chick, and the inclusion of a tracking module that tracks chicks in the received stream of images, allows the system to capitalize on the images acquired throughout the length of the conveyor. By considering multiple images of the chicks under different positions, the system can account for variations and inconsistencies in individual images, leading to a more reliable final classification. At the end of this process, the logistic regression stage can be implemented, which is faster, to make the final determination of the gender of the chick.

According to another object, it is disclosed a for sorting chicks, comprising a conveyor on which chicks are transported, at least one camera configured for acquiring images of the chicks as they are transported on the conveyor, an image processing device according to the description above, configured for receiving a stream of images acquired by the camera and for processing said stream of images to determine the gender of the chicks, and a sorting device, configured to sort chicks based on the determined gender.

In embodiments, the system comprises two cameras whose acquisitions are synchronized, the system further comprising one buffer memory for each camera, configured for storing a determined number of images.

In embodiments, the acquisition module of the image processing device is configured to retrieve images of the same chick from each buffer memory and concatenate them to obtain a single image.

Synchronized camera acquisitions ensure that images of the same chick are captured simultaneously for example from different angles, providing comprehensive visual data. Each camera having a buffer enables the acquisition to be performed in parallel and asynchronously from the other modules. In addition, in case of latency issue with the modules of ROI detection or classification, the buffers enable that the acquisition of images is not compromised.

DESCRIPTION OF THE DRAWINGS

Other features, details, and advantages will become apparent from the following detailed description and from the analysis of the accompanying drawings, in which:

FIG. 1 illustrates schematically a system for sorting chick according to embodiments.

FIG. 2 depicts a block diagram of an image processing device according to embodiments.

FIG. 3A shows an example of ROI detection on a chick image, highlighting the detected regions of interest, when the wing feathers are not apparent in the image.

FIG. 3B shows an image of ROI detection on a chick image, including a detected Region of Interest (ROI) with apparent wing feathers.

FIG. 4 presents example images from a dataset used for training the deep learning model of the classification module, illustrating various wing feather patterns.

FIG. 5 displays a graph depicting the recall versus confidence for the deep learning model of the ROI detection module.

FIG. 6 shows a confusion matrix for the ROI detection model's performance in detecting different categories of regions of interest (ROI).

FIG. 7 represents performance of a gender determination module.

DETAILED DESCRIPTION OF EMBODIMENTS

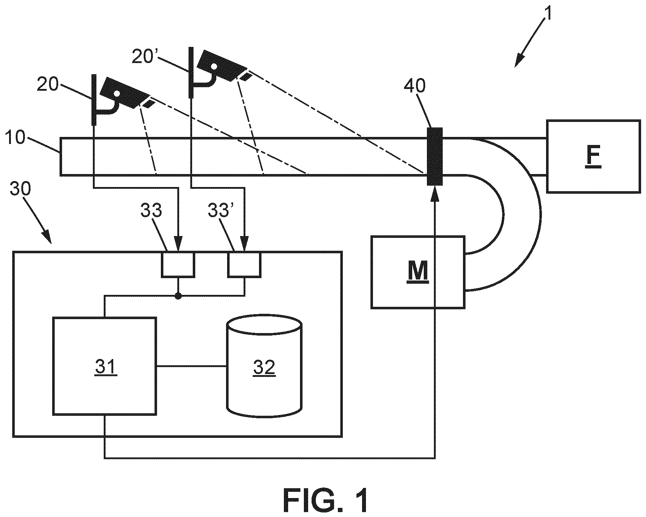

FIG. 1 schematically shows a system for sorting chicks according to embodiments. The system includes one or more conveyors 10 on which chicks are transported. The at least one conveyor 10 is designed to move the chicks in a controlled manner, ensuring that they are properly positioned for image acquisition and subsequent processing. The at least one conveyor may for instance be a belt conveyor, where the belt may be a flexible belt under tension enabling the chicks to be freely conveyed along a displacement direction.

The conveyor 10 may also include at least one component (not shown) encouraging the chicks to open their wings as they are transported. This component may be a gentle air jet, a mechanical stimulator, and/or a light source that prompts the chicks to spread their wings, thereby exposing the wing feathers for better image capture and analysis. A mechanical stimulator may for instance be configured to put the chicks off balance in order to urge them to spread their wings by reflex.

The system comprises at least one camera 20 configured to acquire images of the chicks as they are transported on the conveyor 10. The at least one camera 20 may in particular be configured to acquire images of chicks as they open their wings as a response to the component discussed above, in order to obtain images of the feathers. In embodiments, the system comprises at least two cameras 20 and 20' configured to acquire images for example from different angles and/or at different locations along the path of the conveyor, providing comprehensive visual data. For instance, two cameras may be positioned side by side to increase the field of view, and optical calibration of the images acquired by each camera may be performed so that the end of the image from the first camera aligns with the beginning of the image from the second camera. The cameras may be high-resolution digital cameras, for instance matrix cameras.

In embodiments, each camera is configured for acquiring images at a determined frequency, which is at least one image per second, preferably at least 10 images per second, for instance between 10 and 100 images per second, for instance between 50 and 100 images per second. When the system comprises at least two cameras 20, 20', the images acquisitions by the cameras may be synchronized by an external trigger (for instance integrated with the image processing device described below) in order to enable identifying a same chick apparent on images taken by different cameras.

The system for sorting chicks also includes an image processing device 30, which comprises one or more processing units and one or more memories 32. The processing units in particular include at least one Graphical Processing Unit (GPU) 31, which is particularly suitable for implementing deep learning models. The at least one memory 32 may include Random Access Memory (RAM), Read-Only Memory (ROM), Cache Memory, Graphics Memory such as VRAM, etc. The memory 32 stores deep learning models that have been previously trained for implementing image processing algorithms described below. The memory 32 also stores code instructions executed by the processing units for implementing the method disclosed below.

The image processing device 30 is configured to receive a stream of images from the camera(s) 20 and 20' and process these images to determine the gender of the chicks. In embodiments, the image processing device 30 includes a buffer memory 33 and 33' for each camera 20 and 20', respectively, to store a determined number of images acquired by the respective camera. This configuration allows the acquisition to be performed in parallel and asynchronously from the later processing of the images, ensuring that the acquisition of images is not compromised in case of latency issues with the remainder of the processing.

The system further comprises a sorting device 40, which sorts the chicks based on the determined gender. To this end, the conveyor may be divided into two sections corresponding to each gender, or to three sections comprising a section for male chicks M, a section for female chicks F, and a third section for chicks which gender has not been determined, as the case may be.

In embodiments, the sorting device 40 is mechanically integrated with the conveyor 10 and is designed to direct the chicks to different paths based on the gender determination made by the image processing device 30. The sorting device 40 includes mechanisms such as gates or diverters that guide the chicks to the designated sections for female chicks F and male chicks M. The sorting device 40 may further include a controller, for instance a programmable logic controller (PLC) operating in synchronization with the conveyor 10 and receiving instructions from the image processing device to command the sorting mechanism according to the gender determination.

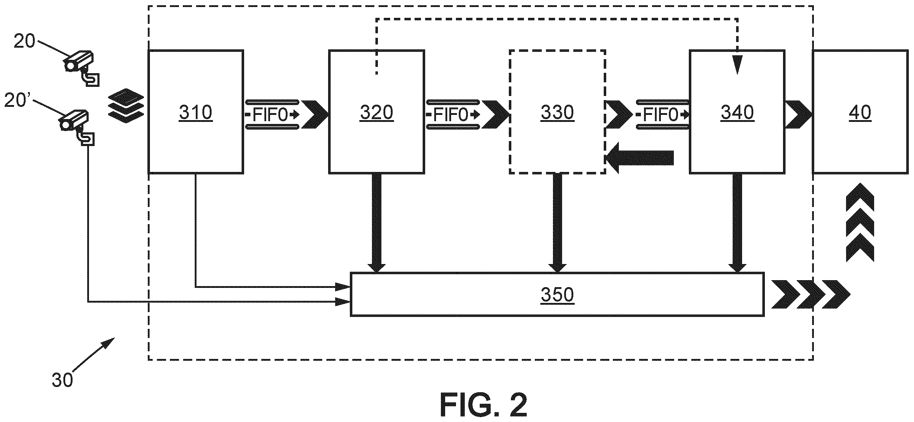

With reference to figure 2, a method for processing a received stream of images implemented by the image processing device 30 will now be described. The image processing device 30 is configured to implement a plurality of functional modules configured to process a stream of images received from the cameras to determine the gender of each chick on the conveyor, the plurality of modules implementing the following functions:

- Image acquisition 310,
- Detection of a Region of Interest from the images 320, and
- Gender determination 340.

Optionally, the image processing device 30 is also configured to implement a tracking module 330 of the chicks in order to identify a same chick in a plurality of images and enhance the reliability of the gender determination. The use of a tracking module may be advantageously combined with the use of two cameras side by side as described above in order to increase the field of view and implement tracking of the chick over the field of enlarged field of view of the two cameras.

In embodiments, all the functional modules processing the stream of images, i.e. the image acquisition module, ROI detection module 320, tracking module 330, and gender determination module 340 operate asynchronously and independently from the other modules, by performing parallel computations on the GPU(s). For instance, all the modules may be implemented by distinct cores of the same GPU or by different GPUs. This enables increased processing speed, reduced latency (and hence increased reactivity at the sorting level), and improved robustness since the failure or delay of one module does not affect the functioning of other modules.

Meanwhile, the images are processed in sequence by the modules according to a FIFO order.

The image processing device 30 first comprises an acquisition module 310 that is configured to control the acquisition of images by the camera(s) and to receive the images acquired by each camera. In embodiments, the acquisition module provides the trigger ensuring synchronized acquisition of images by each camera. The acquisition of images may be implemented continuously at the acquisition frequency mentioned above, whether or not a chick is present on the conveyor. The later processing, and in particular the ROI detection, may then enable discriminating whether or not a chick is present in the image and sorting out the images not representing a chick.

In embodiments, when the system comprises a plurality of cameras, the acquisition module 310 is configured to receive images from the cameras or the buffer memory of each camera. In particular when the cameras are positioned side by side for a single, enlarged field of view, with the end of the images from the first camera aligning with the beginning of the images from the second camera, the acquisition module may be further configured to concatenate the images acquired by the plurality of cameras to obtain a single image.

The image processing device 30 further comprises at least one Region of Interest ("ROI") detection module 320, configured for detecting, in an image of the stream of images, a Region of Interest of wings comprising wing feathers (also called remiges), hereinafter denoted WR. In order to perform ROI detection, the ROI detection module 320 implements a deep learning model, executed on the at least one GPU 31. In embodiments, and especially when the device includes a chick tracking module 330, the ROI detection module is further configured for detecting chicks in the images and thus also outputs a ROI corresponding to the whole detected chick in the image.

The deep learning model may be a neural network, in particular a convolutional neural network. In embodiments, the deep learning model is a YOLO model.

In embodiments, the ROI detection module is further configured for detecting ROI of wings without apparent wing feathers, hereinafter denoted WWR. This additional detection can be used later in the process of gender determination for enhanced accuracy of the final prediction.

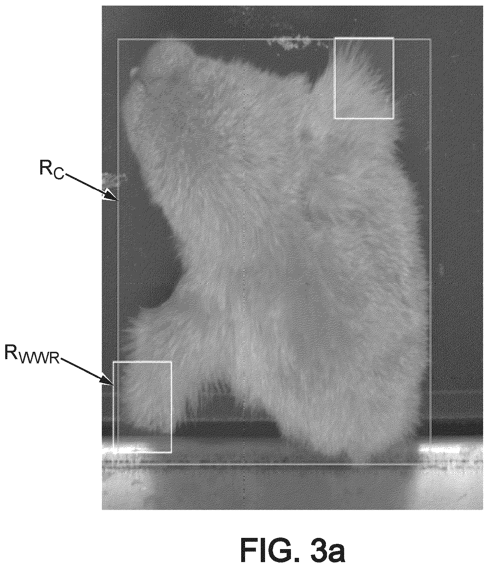

FIG. 3a shows an example of ROI detection on a chick image. Bounding box Rc corresponds to a ROI outlining the entire chick, while the Bounding boxes $R_{WWR}$ corresponds to a Region of Interest of wing devoid of apparent wing feathers.

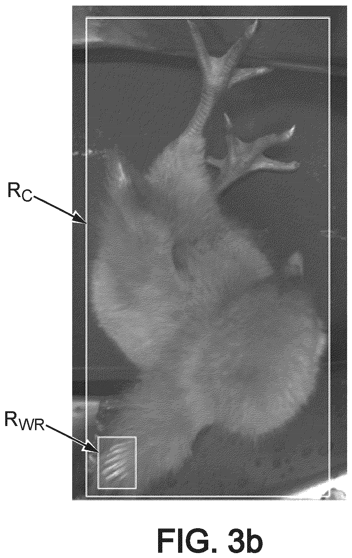

FIG. 3b shows another example of ROI detection. Bounding box $R_C$ is also a ROI outlining the entire chick, while bounding box $R_{WR}$ corresponds to a ROI including apparent wing feathers.

The ROI detection module may also perform preprocessing of the received image(s) or concatenated image, including color conversion, contrast enhancement, noise reduction and/or image normalization.

The image processing device 30 is further configured to implement at least a classification module 340, configured for receiving the ROIs detected by the ROI detection module 320 and for determining the gender of a chick based on the detected ROIs, by application of a deep learning model.

Preferably, the classification module is configured to determine the gender of the chick based on multiple images acquired for the same chicks, and thus based on a plurality of regions of interest detected on various images of the same chick.

This can be implemented for instance when the chick sorting system includes two cameras configured to acquire multiple images of the same chick. Alternatively or additionally, when the image processing device 30 comprises a tracking module 330, the tracking module may be configured to track a chick on the received stream of images and identify a plurality of images corresponding to the same chick. For instance, the tracking module may implement a tracking algorithm such as SORT, DeepSORT, ByteTrack, among others.

In particular, the chick tracking module 330 may receive the regions of interest corresponding to the entire chick as detected by the ROI detection module, assign them to a given chick, and then transmit all the ROI concerning wings (i.e. WR and WWR) detected by the ROI detection module from all the images corresponding to the same chick to the classification module 340.

Back to the classification module 340, when the latter performs gender determination based on a plurality of regions of interest of the same chick, the classification module is preferably configured to pre-classify each Region of Interest comprising apparent wing feathers WR as male or female. Optionally, it may further be configured to pre-classify each ROI into a third class for unknown or undetermined gender. Providing a third class enables reducing the classification error of the model, for instance for noisy image or low confidence scores.

The pre-classification may be implemented by application of a trained deep learning model, such as a Convolutional Neural Network, for instance a residual neural network ResNet.

The classification module 340 may further include a logistic regression stage, configured to make a final determination of the gender of the chick based on the pre-classification results of all the ROI corresponding to the same chick, where said ROI include ROI of wing with apparent wing feathers WR, but may also include ROI of wings without apparent wing feathers WWR. The logistic regression stage performs a synthesis of the pre-classification results obtained for all the ROI corresponding to the same chick. In embodiments, the logistic regression stage may also output a confidence score associated with the determined gender. When the image processing device comprises a tracking module 330, the chick may be tracked and multiple images of the chicks may be acquired as the chick is conveyed until a determined point, at which the logistic regression stage implements the gender determination based on the pre-classification results obtained on the ROI detected from all the acquired images.

In embodiments, the logistic regression stage is configured to compute and rely on a plurality of features according to one or more, possibly all, of the following categories for performing the final determination of the gender of a chick:

- Number of ROI pre-classified as "male" or "female" among the multiple images acquired for the same chick,
- Confidence rates of the ROI detected as "male" or "female", and/or sum of the confidence rates for a plurality of ROI detected as "male" or "female",
- Number of ROI pre-classified as "male" or "female" with a confidence rate exceeding a predefined threshold such as 90% or 95%,
- Number of ROI pre-classified as "male" or "female" but with a confidence score lower than a determined threshold such as 90% or 95%,
- Total number of ROI processed for the considered chick.

Optionally, when the deep learning model is further configured to pre-classify the ROI as "unknown", the logistic regression stage is further configured to compute and use as additional feature the number of ROI of wings with wing feathers that have been classified as "unknown".

Optionally, when the ROI detection module is configured for detecting ROI corresponding to wings without wing feathers WWR, the logistic regression stage is further configured to compute and use as additional feature, binary indicators representing the presence and / or number of ROI corresponding to WWR among the multiple images acquired for the same chick.

Relying on a logistic regression stage for the final gender determination enables performing the final determination very quickly while capitalizing on the plurality of images acquired on the same chick. It may then be taken advantage of an extended length of conveyor for acquiring the images of the chick, to obtain more images in a more important diversity of poses and/or orientation, and it thus improves accuracy of the gender determination.

Once the gender determination module 340 has determined the gender of a chick, it is configured to send the result of the gender determination to the sorting device 40 for implementing the sorting on the conveyor. In embodiments where the image processing device comprises a tracking module, the gender determination module 340 may also be configured to send the result of the gender determination to the tracking module 330 (represented by the arrow from module 340 to module 330 in figure 2) that keeps on tracking the chick until it reaches the sorting device. At this point, either the tracking module may send a signal to the sorting device 40 for implementing the sorting on the conveyor.

Back to figure 2, the image processing device 30 may further comprise an alarm module 350 operating in parallel to the chain of processing modules (310 to 340), and overseeing their operation to inform a human operator in case of dysfunction.

The alarm module 350 may receive data from each module, or from sensors installed within the installation such as camera temperature sensors, light sensors, sensors configured to monitor the conveyor, etc., and trigger surveillance of processes or alarm according to the received data. The data received and processed by the alarm module 350 may include one or more of the following:

- Image acquisition malfunction,
- Excessive camera temperature,
- Excessive, insufficient ambient light,
- Soiling of cameras or conveyor belt,
- Malfunction of a computer component (processing unit or memory)
- Software implementation issue,
- Excessive chicks collision rate,
- Gender determination issue, etc

The alarm module may also stop the operation of the chick sorting system (and in particular stop the conveyor) in case of major issue, to prevent chicks from being conveyed without being sorted.

**Experimental Results**

According to experiments, two synchronized cameras have been used, acquiring about 60 images of each chick.

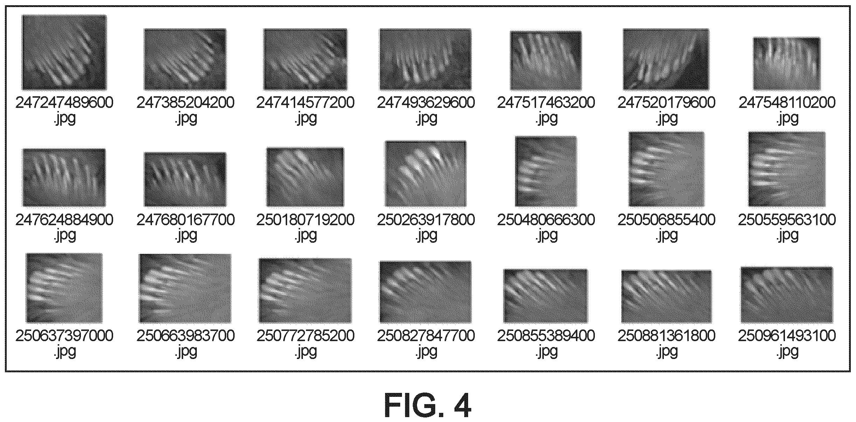

The ROI detection module is a YOLO model (YOLOX) which weights have been quantized (i.e. wherein the weights of the models are converted into a format of lesser size in order to increase inference speed and reduce the memory and computing resources required by the model). The model has been trained by supervised learning on a training dataset containing images of the global field of view of each camera (or, when images are concatenated form a plurality of cameras, from these concatenated images), the images displaying chicks as they pass in from of the cameras, and being manually annotated to identify chicks, wings with apparent wing feathers and wings without apparent feathers. The training dataset comprises images of more than twenty thousand real chicks covering a range of ages from 25 weeks to 98 weeks, under different conditions of lighting and acquisition. Figure 4 shows an exemplary subset of images of this database.

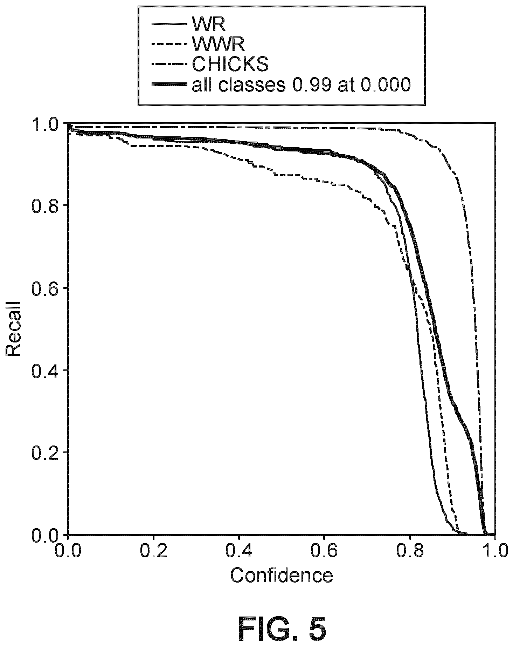

FIG. 5 displays a graph depicting the recall versus confidence for different classes detected by the ROI detection module, where the classes "WR" corresponds to the wings with wing feathers, "WWR" correspond to wings without wing feathers, and "CHICKS" correspond to chicks. The x-axis represents the confidence level, while the y-axis represents the recall rate.

The confidence corresponds to a certainty that the model assigns to its prediction for a given input.

Recall, also known as sensitivity or true positive rate, is a metric used to evaluate the performance of a deep learning model, particularly in classification tasks. It measures the ability of the model to correctly identify all relevant instances within a dataset. In other words, recall quantifies how well the model can detect true positive cases out of all actual positive cases.

Mathematically, recall is defined as:

$$Recall = True\ Positives\ (TP)/(True\ Positives\ (TP) + False\ Negatives\ (FN))$$

Where:

- True Positives (TP) is the number of correctly identified positive instances.
- False Negatives (FN) it the number of positive instances that the model incorrectly identified as negative.

The graph thus shows how the model's recall rate varies with different confidence thresholds for each class. The model detects CHICKS exceptionally well, with recall staying above 0.9 even at confidence thresholds up to 0.85. For WWR, recall drops below 0.6 at a confidence threshold of 0.5 but still demonstrates good performance in real images. Overall, the combined recall for all classes is 0.99 at a confidence threshold of 0.0.

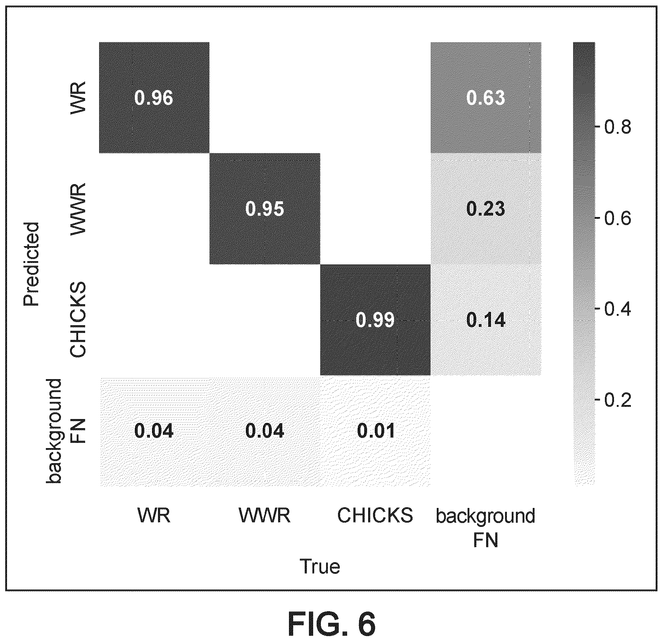

In figure 6 is shown the confusion matrix of the YOLO model used for the ROI detection, identifying the level of accuracy of the detection of wings WR, WWR, chicks and background. The model exhibits an accuracy of 0.99 in chick detection and beyond 0.95 in wing feathers and wings without feathers detection.

The classification module may comprise a ResNet-18 model for ROI WR classification. The ResNet model was converted into layers developed in CUDA and quantized to increase inference speed. The ResNet model was trained by supervised learning on a training dataset formed by ROI of wings with remiges (for instance extracted from the images of the previous dataset used for the training of the ROI detection module) pre-classify each ROI WR as "male", "female" or "unknown", and to further take into account the detected ROI WWR in the final determination.

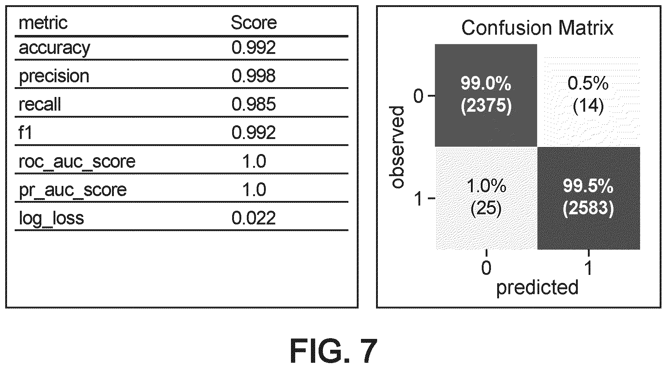

Fig. 7 shows a table of performance and a confusion matrix obtained for the model after training on the training dataset. The model demonstrates high performance with an accuracy of 99.2%, precision of 99.8%, recall of 98.5%, and an F1 score of 99.2%. The ROC AUC and PR AUC scores are both perfect at 1.0, indicating excellent model performance. The log loss is low at 0.022, suggesting good probability estimates. The confusion matrix further confirms the model's effectiveness, with very few misclassifications.

List of reference numbers

**[0072]**

1: System for sorting chicks
10: Conveyor
20, 20' : Cameras
30 : Image processing device
31 : processors
310 : Acquisition module
320 : ROI detection module
330 : Tracking module
340 : Classification module
350 : Alarm module
32 : Memory
33, 33' : Buffer memory
40 : sorting device

**Claims**

1. An image processing device (30) for chick gender determination, comprising at least one Graphical Processing Unit GPU (31) and a memory (32), the image processing device being configured to receive a stream of images, and to implement on the received stream of images:

   - at least one ROI detection module (320), configured for detecting, in an image of the stream of images, a Region of Interest (ROI) of wings comprising wing feathers, and
   - at least one classification module (340), configured for receiving the detected ROI and for determining the gender of a chick based on the detected ROI,

   wherein the ROI detection module (320) and classification module (340) are configured for implementing deep learning models.

2. The image processing device (30) according to claim 1, wherein the ROI detection module (320) and the classification modules (340) are asynchronous.

3. The image processing device (30) according to claim 1 or 2, wherein the classification module (340) is configured to classify the gender of a chick based on multiple images acquired for the same chick.

4. The image processing device (30) according to claim 3, wherein the classification module (340) is configured to pre-classify a Region of Interest comprising wing feathers as male or female by implementation of a deep learning model, and further includes a logistic regression stage configured to make a final determination of the gender of the chick based on the pre-classification results of all the images.

5. The image processing device (30) according to claim 4, wherein the deep learning model is configured to pre-classify a Region of Interest of wing with wing feathers as "male", "female", or "unknown".

6. The image processing device (30) according to any of claims 3 to 5, wherein the ROI detection module is further configured to detect Regions of Interest of wings without wing feathers (WWR), and wherein the classification module is configured to take into account both ROI of wings with wing feathers and ROI of wings without wing feathers obtained for the chick.

7. The image processing device (30) according to any of claims 4 to 6, wherein the logistic regression stage is configured to use one or more of the following categories of features for performing the final determination of the gender of a chick:

- Number of ROI detected as "male" or "female" among the multiple images acquired for the same chick,
- Number of ROI pre-classified as "male" or "female" but with a confidence score lower than a determined threshold such as 90% or 95%,
- Number of ROI pre-classified as "male" or "female" with a confidence score higher than a determined threshold such as 90% or 95%,
- Confidence rates of ROI detected as "male" or "female", and/or sum of the confidence rates for a plurality of ROI detected as "male" or "female",
- Total number of ROI processed for the considered chick.

8. The image processing device (30) according to claims 6 and 7 in combination, wherein the logistic regression stage is further configured to use, for performing the final determination of the gender of a chick, binary indicators representing the presence of wings without wing feathers among the multiple images acquired for the same chick.

9. The image processing device (30) according to claims 5 and 7 in combination, wherein the logistic regression stage is further configured to use, for determining the gender of a chick, a number of ROI of wings with wing feathers detected as "unknown" among the multiple images acquired for the same chick.

10. The image processing device (30) according to any of the preceding claims, further comprising a tracking module (330) configured to track chicks on the received stream of images.

11. A system (1) for sorting chicks, comprising a conveyor (10) on which chicks are transported, at least one camera (20, 20') configured for acquiring images of the chicks as they are transported on the conveyor (10), an image processing device (30) according to any of the preceding claims, configured for receiving a stream of images acquired by the camera and for processing said stream of images to determine the gender of the chicks, and a sorting device (40), configured to sort chicks based on the determined gender.

12. The system (1) according to claim 11, comprising two cameras (20, 20') whose acquisitions are synchronized, the system (1) further comprising one buffer memory (33, 33') for each camera (20, 20'), configured for storing a determined number of images.

13. The system (1) according to claim 12, wherein the acquisition module (310) of the image processing device (30) is configured to retrieve images of the same chick from each buffer memory (33, 33') and concatenate them to obtain a single image.

FIG. 1

FIG. 2

FIG. 3a

FIG. 3b

FIG. 4

Legend:
— WR
---- WWR
-·-·- CHICKS
— all classes 0.99 at 0.000

FIG. 5

FIG. 6

| metric | Score |
|--------|-------|
| accuracy | 0.992 |
| precision | 0.998 |
| recall | 0.985 |
| f1 | 0.992 |
| roc_auc_score | 1.0 |
| pr_auc_score | 1.0 |
| log_loss | 0.022 |

**Confusion Matrix**

|  | predicted 0 | predicted 1 |
|--|-------------|-------------|
| observed 0 | 99.0% (2375) | 0.5% (14) |
| observed 1 | 1.0% (25) | 99.5% (2583) |

# FIG. 7

Europäisches
Patentamt

European
Patent Office

Office européen
des brevets

# EUROPEAN SEARCH REPORT

**Application Number**

EP 24 30 7297

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 190 935 A (SHANGHAI XIASHU INTELLIGENT TECH CO LTD) 14 June 2024 (2024-06-14) | 1-3, 10-13 | INV. G06V40/10 A01K45/00 |
| A | * the whole document * | 4-9 | |
| A | LI KEQIANG ET AL: "Using machine vision to realize semi-automatic sex recognition of chicks", SEMINA: CIÊNCIAS AGRÁRIAS, [Online] vol. 46, no. 1, 12 December 2024 (2024-12-12), pages 131-148, XP093257901, ISSN: 1676-546X, DOI: 10.5433/1679-0359.2025v46n1p131 Retrieved from the Internet: URL:https://ojs.uel.br/revistas/uel/index.php/semagrarias/article/download/50982/51299> [retrieved on 2025-03-17] * abstract * * Paragraph Material and Methods; page 134 - page 140 * | 1-13 | |

**TECHNICAL FIELDS SEARCHED (IPC)**

G06V
A01K

The present search report has been drawn up for all claims

| Place of search | Date of completion of the search | Examiner |
|---|---|---|
| The Hague | 19 March 2025 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 24 30 7297

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | Publication date | Patent family member(s) | Publication date |
|---|---|---|---|
| CN 118190935 A | 14-06-2024 | NONE | |

EPO FORM P0459

For more details about this annex : see Official Journal of the European Patent Office, No. 12/82

**REFERENCES CITED IN THE DESCRIPTION**

**Patent documents cited in the description**

- WO 2023281197 A

**Non-patent literature cited in the description**

- **TAO et al.** *Chick Feather Pattern Recognition*